Europäisches Patentamt

(19) European Patent Office

Office européen des brevets

(11) Numéro de publication: **0 122 847**
**B1**

(12) **FASCICULE DE BREVET EUROPEEN**

(45) Date de publication du fascicule du brevet:
**26.08.87**

(51) Int. Cl.⁴: **C 09 J 7/02**

(21) Numéro de dépôt: **84400670.0**

(22) Date de dépôt: **05.04.84**

(54) Nouveau matériau auto-adhésif et son procédé de fabrication.

(30) Priorité: **08.04.83 FR 8305795**

(43) Date de publication de la demande:
**24.10.84 Bulletin 84/43**

(45) Mention de la délivrance du brevet:
**26.08.87 Bulletin 87/35**

(84) Etats contractants désignés:
**AT BE CH DE GB IT LI LU NL SE**

(56) Documents cités:
**DE - C - 974 178**
**US - A - 3 364 063**

(73) Titulaire: **Pasquali, Jean-Claude, 47, rue Basse,**
**F-91650 Bouray-sur-Juine (FR)**
Titulaire: **Binet, Jean-Claude, 6, rue Pablo Picasso,**
**F-94000 Creteil (FR)**

(72) Inventeur: **Pasquali, Jean-Claude, 47, rue Basse,**
**F-91650 Bouray-sur-Juine (FR)**
Inventeur: **Binet, Jean-Claude, 6, rue Pablo Picasso,**
**F-94000 Creteil (FR)**

(74) Mandataire: **Daudens, Michèle, 14, rue Gustave Flaubert,**
**F-77340 Pontault-Combault (FR)**

ACTORUM AG

# Description

L'invention concerne un nouveau matériau auto-adhésif et son procédé de fabrication.

On connaît des matériaux sur lesquels est disposé par enduction une masse adhésive conférant un pouvoir adhésif aux surfaces sur lesquelles elle est appliquée. Ce dépôt est généralement réparti uniformément sur la surface d'application rendant cette surface uniformément adhésive avec un pouvoir adhésif directement proportionnel à cette surface. Dans le brevet allemand no 974 178 la masse adhésive est appliquée sur le matériau pour obtenir des espaces dépourvus de masse adhésive. Selon le brevet américain no 3 364 063, la masse adhéssive est appliquée par projection de gouttelettes ce qui évite la formation d'un film continu. Le pouvoir adhésif de ces matériaux est directement proportionnel à la largeur d'utilisation. Cette adhésion s'exprime en pouvoir adhésif linéaire suivant les normes exprimant la force nécessaire à appliquer liinéairement pour décoller le matériau du support sur lequel il a été adhésivé.

Les masses adhésives actuellement utilisables pour conférer un pouvoir adhésif permanent à des matériaux destinés à une utilisation en auto-adhésif fournissent un pouvoir adhésif linéaire se situant généralement entre 50 et 800 N/m (ou g/cm) environ suivant leur nature. Il faut tenir compte qu'en dessous de 150N/m (ou g/cm), l'adhésion est pratiquement inexistante sauf sur quelques supports tels que marbre, verre, métal. Si l'on prend comme exemple un matériau ayant un pouvoir adhésif moyen se situant aux environs de 350 N/m (ou g/cm), la force nécessaire pour décoller un tel matériau se situe environ à 35 N (3 kg 500) si il est utilisé en 0,10 m (10 cm) et de 350 N (35 kg) si il est appliqué sur 1 mètre de large.

On se rend compte par cet exemple que même en disposant de la force nécessaire, presque tous les matériaux utilisés en auto-adhésifs sont des films dont la fragilité ne supporte pas de tels efforts (papier, films plastiques) ce qui les rend inutilisables au delà de 10 cm de large.

Or, dans des nombreuses applications, on désire des produits qui aient une bonne adhérence mais qui pourtant soient facilement décollables même s'ils sont appliqués sur des surfaces importantes. Il est actuellement difficile et même impossible d'obtenir des produits auto-adhésifs dont la force d'adhérence ne soit pas directement proportionnelle à la surface d'application.

La présente invention vise à pallier ces inconvénients.

Le but de l'invention est de réaliser des matériaux auto-adhésifs ayant une surface d'adhésion inférieure à la surface d'application pour éviter que le pouvoir adhésif de la masse adhésive utilisée ne se developpe de manière directement proportionnelle à la surface d'application.

Un autre but de l'invention est de fournir un procédé de fabrication de produits auto-adhésifs facilement décollables utilisés en grande largeur.

Les produits auto-adhésifs selon l'invention sont tels que le rapport de surface d'adhésion à la surface d'application est toujours inférieure à 1.

Ainsi on dépose la masse adhésive sur le matériau à rendre auto-adhésif de manière à ce que la surface de ce dépôt soit inférieure à la surface du matériau sur lequel est appliqué cette masse. Le pouvoir adhésif de cette masse se trouve de ce fait réparti sur une surface inférieure à la surface sur laquelle il est appliqué.

Ainsi si l'on utilise un support ajouré, support sur lequel on dépose la masse adhésive, la surface adhésive est inférieure à la surface compléte de ce support.

Le produit selon l'invention est constitué d'au moins un matériau ajouré, sur quel on applique l'adhésif. Préférentiellement, le produit selon l'invention est constitué d'un matériau souple, par exemple une grille ou filet, constitué de fils chaîne et trame.

L'invention concerne en outre un procédé de fabrication d'un produit autoadhésif, dans lequel on applique une masse adhésive sur un matériau ajouré.

Selon l'invention on applique la masse adhésive par trempage du support dans une solution, émulsion ou dispersion de cette masse en contrôlant quantitativement la répartition du dépôt par calendrage ou soufflage.

Enfin, on peut placer le matériau ajouré sur une feuille plane sur laquelle il adhère, par exemple du papier, ou une feuille sur laquelle il n'adhère pas, par exemple une feuille siliconée.

Enfin on rend solidaire par séchage, la masse adhésive et le matériau ajouré avec la feuille pour obtenir le matériau auto-adhésif.

La description suivante, en regard des dessins annexés à titre d'exemples permettra de comprendre comment l'invention peut être mise en pratique.

La fig. 1 est une vue schématique de la surface d'application et de la surface d'adhésion d'un produit auto-adhésif selon l'invention.

La fig. 2 est une vue schématique d'un mode de réalisation du produit auto-adhésif.

La fig. 3 est une vue schématique d'un troisième mode de réalisation, en éclaté.

La fig. 4 est une vue d'un dispositif utilisé pour la fabrication du produit selon l'invention.

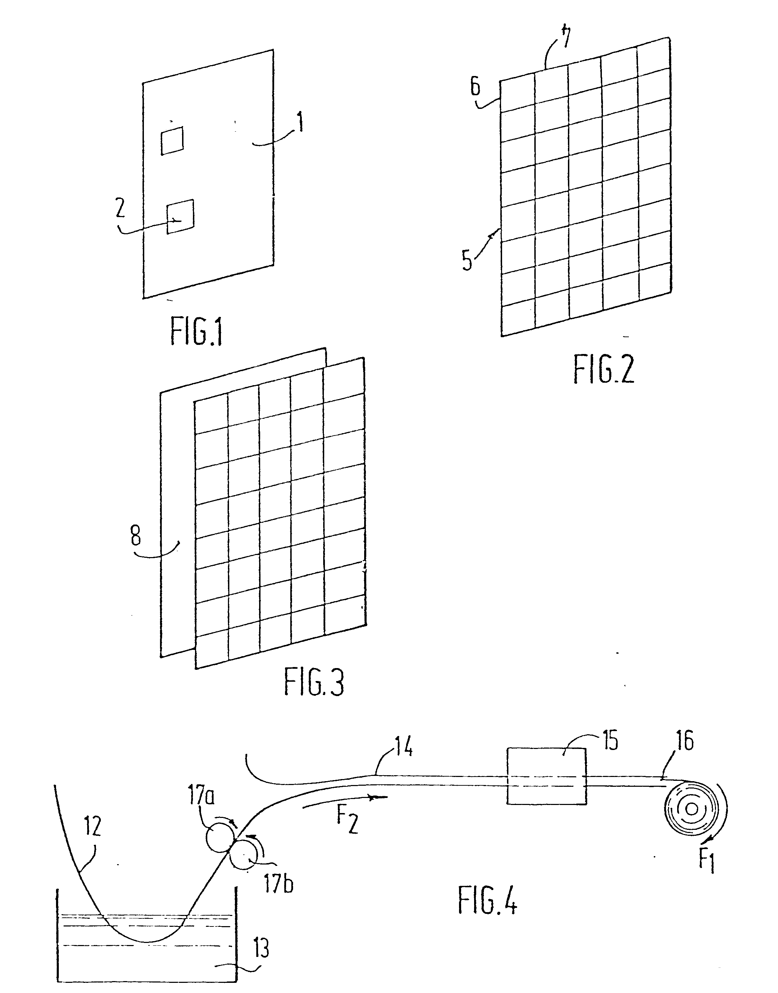

Sur la figure 1, on a représenté la surface d'application (Sappl) et la surface d'adhésion 2 (Sad). On appelle surface d'application la surface sur laquelle on applique le matériau auto-adhésif réalisé selon l'invention. Cette surface est quelconque mais plus préférentiellement elle est sensiblement plane.

Il peut s'agir d'un mur ou d'un plancher ou d'un plafond d'une pièce qui doit être revêtu temporairement ou définitivement de papier peint par exemple, ou de tissu ou encore d'une protection en papier épais.

On appelle surface d'adhésion 2 la surface totale de contact adhésivée. Cette surface d'adhésion est selon l'invention, telle que le rapport de la surface d'adhésion Sad à la surface d'application Sappl est inférieure à 1. On peut donc écrire:

$$\frac{Sad}{Sappl} < 1$$

Selon l'invention ce rapport n'est pas égal à 1. En effet lorsque

$$\frac{Sad}{Sappl}$$

est égal à 1, il s'agit d'un produit de la technique antérieure.

Selon l'invention, le produit auto-adhésif est constitué d'au moins un support ajouré 5 enrobé d'une masse adhésive, de préférence flexible, notamment une grille constituée de fils de trâme 6 et de fils de chaîne 7 et d'une feuille constituant le matériau 8 disposée contre une face du support ajouré 5. La grille est sensiblement plane et flexible dans une direction perpendiculaire à son plan.

De préférence, elle est inextensible dans la direction des fils de trame et dans la direction des fils de chaîne. Les fils de trame et de chaîne sont par exemple parallèles respectivement les uns aux autres et forment des parallélogrammes, notamment des rectangles ou des carrés. Ils peuvent éventuellement être courbes.

Sur cette grille est disposé un adhésif qui enrobe les fils de trame et de chaîne.

La surface de la grille 5, agissant comme support est inférieure à la surface d'application, à savoir la surface sur laquelle on applique le matériau auto-adhésif. En effet si la grille a une longueur L et une largeur 1 la surface d'application sera L×1 alors que la surface des fils et trame est bien inférieure.

La surface d'application 1 sur laquelle on applique le matériau auto-adhésif est égale à la surface compléte du matériau 8.

De préférence, le produit adhésif est constitué d'un support souple 5 enrobé d'un masse adhésive placée entre deux feuilles 8 planes. Ces feuilles sont par exemple constituées de papier fort, de tissu, d'une feuille de matière synthétique sur laquelle s'accroche ou non la grille 5 enrobée d'adhésif.

Selon un exemple de rélisation, le matériau auto-adhésif est constitué d'une feuille sur laquelle adhère fortement la grille 5 enrobée d'adhésif et d'une feuille sur laquelle adhère faiblement la grille 5, par exemple une feuille siliconée.

Ainsi, on pourra utiliser un «sandwich» constitué d'un tissu ou papier peint, d'une grille 5 enrobée d'un adhésif, et d'un papier siliconé. On obtient alors un produit utile pour la décoration des intérieurs.

Procédé de fabrication d'un produit auto-adhésif selon l'invention:
– on introduit un support ajouré 12 dans une masse adhésive 13 en solution, émulsion, suspension,

– on enlève l'excès de la masse d'adhésive 13 du support 12,
– on reporte le support adhésivé sur au moins une feuille 14 pour que la somme des surfaces recouvertes par la masse adhésive soit inférieure à a surface de la feuille 14.
– on rend solidaire par séchage le support adhésivé et la feuille.

Selon un autre mode de réalisation, on place le support 12 enduit d'une masse adhésive au dessus d'au moins une feuille 14, puis on fait passer l'ensemble dans un four 15 en aval qui permet la fixation par séchage.

Enfin, on enroule le produit auto-adhésif 16 obtenu en une bobine.

La bobine tournant dans le sens de la flèche $F_1$. Les feuilles 14 respectivement et la matériau 12 sont entraînées dans le sens de la flèche $F_2$.

On peut enlever l'excès de la masse adhésive à l'aide de deux cylindres ou masses 17a, 17b placés à la sortie du bain d'adhésif 13 ou encore par soufflage ou les deux à la fois.

Préférentiellement la première feuille 14 est une feuille de papier, de tissu ou film plastique sur laquelle adhère le matériau souple 12 enrobé d'une masse adhésive et la seconde feuille est une feuille siliconée sur laquelle adhère très peu ou faiblement le support souple 12.

Selon l'invention, on obtient un produit auto-adhésif 16 qui peut comporter une masse adhésive à haut pouvoir adhésif qui se trouve proportionnellement répartie en fonction du pouvoir adhésif linéaire recherché quelque soit la surface d'application.

Ainsi, plus la somme des surfaces d'adhésion est faible et plus on peut utiliser une masse adhésive à haut pouvoir adhésif. On peut donc régler le pouvoir adhésif linéaire et ce, indépendamment de la surface d'application.

Pour modifier la surface d'adhésion on peut par exemple dans le cas d'une grille, modifier la distance respective entre les fils de chaîne et les fils de trame.

Le produit auto-adhésif selon l'invention peut être constitué par une grille souple enrobée d'adhésif, la grille étant appliquée sur un matériau anti-adhérent siliconé par exemple, pour la protéger à l'enroulement. On peut aussi appliquer cette grille sur un matériau quelconque et après avoir rétiré la protection antiadhérente, appliquer sur l'autre face de la grille un autre matériau, la grille agissant ainsi comme produit auto-adhésif d'assemblage.

## Revendications

1. Produit auto-adhésif, caractérisé par le fait qu'il est constitué d'au moins un support (5) ajouré, enrobé d'une masse adhésive, ledit support étant reporté sur un autre matériau (8) et sa fonction étant de fournir une surface de contact adhésive inférieure à la surface totale du produit auto-adhésif ainsi réalisé.

2. Produit auto-adhésif selon la revendication 1, caractérisé par le fait que le support est constitué d'une grille (5) sensiblement plane, flexible, constituée de fils de trame (6) et de fils de chaîne (7).

3. Produit auto-adhésif selon la revendication 2, caractérisé par le fait que la grille (5) est placée entre une feuille (8) à laquelle le produit adhésif adhère bien et une seconde feuille à laquelle le produit adhésif adhère peu.

4. Produit auto-adhésif selon l'une quelconque des revendications 1 et 3, caractérisé par le fait qu'il est constitué par une grille souple enrobée d'adhésif, appliquée sur un matériau anti-adhérent pour la protéger.

5. Procédé de fabrication d'un produit auto-adhésif permettant d'appliquer une masse adhésive en certains points d'un matériau caractérisé par le fait qu'il comporte les étapes suivantes:
- on introduit un support ajouré (12) dans une masse adhésive (13), en solution, émulsion, suspension;
- on enlève l'excès de la masse adhésive (13) du support (12);
- on reporte le support adhésivé sur au moins une feuille (14) pour que la somme des surfaces recouvertes par la masse adhésive soit inférieure à la surface de la feuille (14).
- on rend solidaire par séchage le support adhésivé et la feuille.

6. Procédé selon la revendication 5 caractérisé par le fait qu'on place le support (12) enduit de masse adhésive au-dessus d'au moins une feuille (14), puis on fait passer l'ensemble dans un four (15) en aval qui permet le séchage et la fixation.

## Patentansprüche

1. Selbstklebendes Produkt, dadurch gekennzeichnet, dass es aus mindestens einem durchbrochenen Träger (5) besteht, der von einer Klebstoffmasse umhüllt ist und auf ein anderes Material (8) aufgebracht ist und der die Funktion hat, eine Klebstoff-Kontaktoberfläche zu schaffen, die kleiner ist als die Gesamtoberfläche des so hergestellten selbstklebenden Produkts.

2. Selbstklebendes Produkt nach Anspruch 1, dadurch gekennzeichnet, dass der Träger aus einem praktisch ebenen, flexiblen Gitter (5) besteht, das aus Schussfäden (6) und Kettfäden (7) aufgebaut ist.

3. Selbstklebendes Produkt nach Anspruch 2, dadurch gekennzeichnet, dass das Gitter (5) zwischen einem Blatt (8), an dem das Klebstoffprodukt gut haftet, und einem zweiten Blatt, an dem das Klebstoffprodukt wenig haftet, angeordnet ist.

4. Selbstklebendes Produkt nach einem der Ansprüche 1 und 3, dadurch gekennzeichnet, dass es aus einem weichen Gitter besteht, das von einem Klebstoff umhüllt und auf ein nichtklebendes Material aufgebracht ist, um es zu schützen.

5. Verfahren zur Herstellung eines selbstklebenden Produktes, welches das Aufbringen einer Klebstoffmasse an bestimmten Punkten auf ein Material erlaubt, dadurch gekennzeichnet, dass es die folgenden Stufen umfasst:
- man führt einen durchbrochenen Träger (12) in eine in Lösung, Emulsion oder Suspension vorliegenden Klebstoffmasse (13) ein;
- man entfernt den Überschuss der Klebstoffmasse (13) von dem Träger (12);
- man legt den mit Klebstoff versehenen Träger so auf mindestens ein Blatt (14), dass die Summe der von der Klebstoffmasse bedeckten Oberflächen kleiner ist als die Oberfläche des Blattes (14), und
- man verbindet den mit Klebstoff versehenen Träger mit dem Blatt durch Trocknen.

6. Verfahren nach Anspruch 5, dadurch gekennzeichnet, dass man den von der Klebstoffmasse umhüllten Träger (12) auf mindestens ein Blatt (14) auflegt und dann das Ganze zur Trocknung und Fixierung in einen Ofen (15) einführt.

## Claims

1. A self-adhesive product, characterised in that it comprises at least one punched support (5), coated with an adhesive mass, the said support being placed on another material (8) and its function being to provide an adhesive contact surface area lower than the total surface area of the self-adhesive product made in this way.

2. A self-adhesive product according to claim 1, characterised in that the support comprises a grid (5) which is substantially flat and flexible, comprising weft threads (6) and warp threads (7).

3. A self-adhesive product according to claim 2, characterised in that the grid (5) is disposed between a sheet (8) to which the adhesive product adheres well and a second sheet to which the adhesive product does not adhere.

4. A self-adhesive product according to either of claims 1 and 3, characterised in that it comprises a flexible grid coated with adhesive, pressed onto an non-adhesive material to protect it.

5. A method for manufacturing a self-adhesive product which permits an adhesive mass to be applied at certain points of a material, characterised in that it comprises the following stages:
a. a punched support (12) is inserted into an adhesive mass (13), in solution, emulsion, suspension;
b. the excess adhesive mass (13) is removed from the support (12);
c. the adhesive support is placed onto at least one sheet (14) so that the sum total of the surface area covered by the adhesive mass is lower than the surface area of the sheet (14);
d. the adhesive support and the sheet are made integral with one another by drying.

6. A method according to claim 5, characterised in that the support (12) coated with the adhesive mass is disposed above at least one sheet (14), then the whole unit is placed in an oven (15) downstream which permits drying and setting.

FIG.1

FIG.2

FIG.3

FIG.4